# EUROPÄISCHE PATENTSCHRIFT

(11) **EP 4 605 671 B1**
(45) Veröffentlichungstag und Bekanntmachung des Hinweises auf die Patenterteilung: **29.07.2026**
(21) Anmeldenummer: 23786256.0
(22) Anmeldetag: 09.10.2023
(51) Int. Cl.: F03D 80/70, F16H 57/08, F16H 57/04, F16H 57/00, F16D 1/00, F16D 1/116, F16D 1/10

(54) **WELLE-NABE-VERBINDUNG FÜR EIN GETRIEBE**
SHAFT-HUB CONNECTION FOR A TRANSMISSION
LIAISON ARBRE-MOYEU POUR UNE TRANSMISSION

(30) Priorität: 21.10.2022 EP 22202892
(43) Veröffentlichungstag der Anmeldung: 27.08.2025
(73) Patentinhaber: Flender GmbH, 46395 Bocholt (DE)
(72) Erfinder: TÜSHAUS, Tino, 46395 Bocholt (DE); HAAKE, Norbert, 46395 Bocholt (DE)
(74) Vertreter: Michalski Hüttermann & Partner mbB
(86) Internationale Anmeldenummer: PCT/EP2023/077873
(87) Internationale Veröffentlichungsnummer: WO 2024/083549

(56) Entgegenhaltungen:
- WO-A1-2017/032558
- CN-A- 113 175 520
- CN-U- 206 943 391
- US-A1- 2016 223 073
- US-B2- 10 436 249

## Beschreibung

Die Erfindung betrifft eine Welle-Nabe-Verbindung für ein Planetengetriebe, umfassend eine Welle, ein mit der Welle über eine Steckverzahnung um eine Hauptrotationsachse A_{R} antriebsverbundenes und die Welle außenumfänglich umgebendes Nabenelement, wobei ein bezüglich der Hauptrotationsachse feststehendes Gehäuseelement vorgesehen ist und in dem Gehäuseelement und dem Nabenelement ein im Bereich der Steckverzahnung mündender Ölkanal verläuft, um über den Ölkanal zumindest der Steckverzahnung Schmieröl zur Beölung zuzuführen.

Planetengetriebe, beispielsweise als Windanlagengetriebe vorgesehen, können Steckverzahnungen zwischen zwei miteinander rotierenden Bauteilen umfassen. Die ausreichende Versorgung derartiger Metall-Metall-Kontakte mit Schmiermittel ist wichtig, um den Verschleiß zu vermindern. Die nur indirekte Zugänglichkeit der Schmierstellen und die durch die Rotation der Bauteile verursachte Fliehkraftwirkung macht eine ausreichende Schmierstoffversorgung mittels einer Ölspritz- bzw. Ölsprüheinrichtung schwierig. Bisherige Lösungen sahen beispielsweise ein Einspritzen eine Ölstrahles in einen Spalt der Verzahnungspaarung zwischen Wellen- und Nabenelement vor. Das Wellenelement ist in der Ausführung eines Windanlagengetriebes in der Regel eine Sonnenradwelle, die einen Kraftfluss an ein hohles Nabenelement einer Stirnradstufe überträgt. Die Stirnradstufe ist in dem Windanlagengetriebe generatorseitig angeordnet und somit bezogen auf das Planetengetriebe ausgangsseitig angeordnet.

Das Dokument CN 205446657 U zeigt ein Planetengetriebe bei dem Schmieröl ausgangseitig über ein Gehäuseelement zugeführt wird. Das Schmieröl wird über das Gehäuseelement in das rotierende Nabenelement eingeleitet. Die WO 2017/032558 A1 zeigt eine Planetenstufe und eine nachfolgende Stirnradstufe. Zwischen der Planetenstufe und der Stirnradstufe ist ausgehend von dem radial äußeren Gehäuse ein Ölkanal nach radial innen zu der Steckverzahnung geführt. Das Dokument CN 113175520A offenbart ebenfalls eine Welle-Nabe-Verbindung.

Die US 2016/223073 A1 zeigt eine Ölübergabe von dem generatorseitigen Abstützflansch der letzten Planetenstufe nach radial innen in die Hohlwelle, in der das Öl zu der Steckverzahnung geleitet wird. Es besteht ein ständiges Bedürfnis die Ölzuführung zu der Steckverzahnung weiter zu verbessern.

Es ist die Aufgabe der Erfindung Maßnahmen aufzuzeigen, die eine verbesserte Ölzuführung zu der Steckverzahnung ermöglichen.

Die Lösung der Aufgabe erfolgt durch eine Welle-Nabe-Verbindung mit den Merkmalen des Anspruchs 1. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Eine Ausführungsform betrifft eine Welle-Nabe-Verbindung für ein Planetengetriebe, umfassend eine Welle, ein mit der Welle über eine Steckverzahnung um eine Hauptrotationsachse AR antriebsverbundenes und die Welle außenumfänglich umgebendes Nabenelement, wobei ein bezüglich der Hauptrotationsachse feststehendes Gehäuseelement vorgesehen ist und in dem Gehäuseelement und dem Nabenelement ein im Bereich der Steckverzahnung mündender Ölkanal verläuft, um über den Ölkanal zumindest der Steckverzahnung Schmieröl zur Beölung zuzuführen, wobei der Ölkanal zwischen dem Gehäuseelement und dem Nabenelement einen Schmierspalt zur Übergabe von Schmieröl ausbildet und im Bereich des Schmierspaltes von radial innen nach radial außen verläuft.

Die Hauptrotationsachse A_{R} legt vorliegend die Axialrichtung fest, so dass sich aus dieser Axialrichtung die jeweiligen Radialrichtungen ergeben. Das Nabenelement kann je nach zugrundliegender Konfiguration als Hohlwelle ausgeführt sein. Die Steckverzahnung, die die Welle und das Nabenelement zur Übertragung eines Drehmoments formschlüssig miteinander verbindet, kann als Kurzverzahnung bezeichnet werden. Die Verzahnung kann schrägverzahnt ausgeführt sein. Das Nabenelement und die Welle können über Lageranordnungen beispielsweise gegenüber einer Getriebegehäusestruktur, die das Gehäuseelement umfasst, gelagert sein, wobei eine der Lagerungen dazu ausgebildet ist Axialkräfte aufzunehmen bzw. abzustützen. Die Welle kann zentrisch ein Pitchrohr in sich aufnehmen, durch das elektrische Leitungen hindurchgeführt sind.

Bei dem Gehäuseelement kann es sich um einen Deckel eines Getriebegehäuses handeln. Der Deckel kann gegen das Getriebegehäuse angesetzt und verschraubt sein. In dem Gehäuseelement kann eine hauptsächliche Ölversorgung vorgesehen sein, wobei der Ölkanal von dieser Ölversorgung abzweigt. Über den Schmierspalt erfolgt eine Abdichtung zwischen dem stillstehenden Gehäuseelement und dem sich im Betrieb drehenden Nabenelement. Über den Schmierspalt erfolgt eine Ölübergabe von einer stillstehenden Komponente in eine rotierende Komponente. Dem Schmierspalt kommt demzufolge die Funktion einer Ölübergabe von einer stillstehenden und einer rotierenden Komponente. Bevorzugt ist ein Getriebegehäuse vorgesehen ist, in dem die Welle-Nabe-Verbindung aufgenommen ist und das Gehäuseelement als endseitig angeordneter Gehäusedeckel des Getriebegehäuse ausgebildet ist. Insbesondere kann die Anordnung derart getroffen sein, dass das Gehäuseelement radial innerhalb in dem Nabenelement einsitzt bzw. dass das Gehäuseelement radial innerhalb in dem Nabenelement eingeschoben ist.

Es kann vorgesehen sein, dass auf einer Innenumfangsfläche des Gehäuseelements oder einer Außenumfangsfläche des Nabenelements eine Beschichtung aus einem gleitfähigen Material aufgebracht ist. Die Gleitbeschichtung ist insbesondere zum Schutz vor Schäden durch Anlaufen der Komponenten.

In einer alternativen Ausgestaltung kann zwischen dem Gehäuseelement und dem Nabenelement eine Buchse angeordnet sein und der Schmierspalt zwischen der Buchse und dem Nabenelement gebildet sein. Die Buchse besteht bevorzugt aus einer Kupfer-Zinn-Legierung.

In einer bevorzugten Ausgestaltung der Wellen-Nabe-Verbindung führt umlaufend zumindest eine radiale Bohrung zu mindestens einer umfänglich verlaufenden Ölnut am Schmierspalt. Bevorzugt sind eine Mehrzahl radialer Bohrungen vorgesehen. Hierbei können die radialen Bohrungen gleichmäßig über den Umfang verteilt angeordnet sein. Die Bohrungen können kreisförmig oder oval ausgebildet sein. Die Bohrungen können auch in Umfangsrichtung schlitzförmig ausgeformt sein. Hierbei können beispielsweise drei oder vier Schlitze über den Umfang vorgesehen sein.

Eine bevorzugte Weiterbildung der Wellen-Nabe-Verbindung sieht vor, dass bei Einsatz der zusätzlichen Buchse, diese an dem Gehäuseelement drehfest gehalten ist. Insbesondere ist bevorzugt, dass ein definiert radialer Abstand zwischen dem Gehäuseelement oder der optionalen Buchse und dem Nabenelement besteht bzw. eingestellt ist, so dass sich hier ein Schmierspalt zwischen Gehäuseelement oder der optionalen Buchse und rotierendem Nabenelement einstellt.

In einer besonders bevorzugten Ausgestaltung ist vorgesehen, dass die Buchse auf einer Innenumfangsfläche und/oder auf einer Außenumfangsfläche eine umfänglich verlaufende Ölnut ausbildet. Hierbei erscheint es dann zweckmäßig, wenn die radialen Durchgangsbohrungen in einer Axialebene mit der zumindest einen Ölnut liegen. D.h. die Durchgangsbohrung verlaufen ausgehend von einem Grund der Ölnut. Bei der Variante der außenumfänglichen und innenumfänglichen Ölnut liegen diese bevorzugt in einer Axialebene der Buchse.

In einer alternativen Ausgestaltung der Welle-Nabe-Verbindung kann vorgesehen sein, dass eine Innenumfangsfläche des Nabenelements eine umfänglich verlaufende Ölnut ausbildet und die Ölnut in einer Axialebene mit den radialen Durchgangsbohrungen der Buchse liegt.

Um die Ölmenge zu regulieren, die von der hauptsächlichen Ölversorgung in den Ölkanal abgezweigt wird, kann in dem Gehäuseelement der Ölkanal durch eine Blendbohrung geführt sein. Die Blendenbohrung kann optional auch erst hinter dem Schmierspalt im Ölkanal innerhalb des Nabenteils eingebracht sein.

Bei einer ersten Variante des Ölkanals kann vorgesehen sein, dass dieser in dem Nabenelement über einen axialen Verlauf im Bereich der Steckverzahnung mündet. Bei einer zweiten Variante des Ölkanals kann vorgesehen sein, dass dieser in dem Nabenelement über einen radialen Verlauf im Bereich der Steckverzahnung mündet.

Die Welle-Nabe-Verbindung ist zudem bevorzugt dahingehend ausgebildet, dass die Welle und das Nabenelement über eine Paarung von Axialkontaktflächen aneinander anliegen. Bevorzugt mündet der Ölkanal in einem axialen Bereich zwischen der Steckverzahnung und der Paarung von Axialkontaktflächen. Es ist also in vorteilhafter Weise möglich, über den Ölkanal sowohl die Steckverzahnung als auch die Paarung von Axialkontaktflächen während eines Betriebs zu beölen und den Verschleiß zu verringern. In den beiden Axialkontaktflächen können Schmiernuten eingebracht sein, um die Schmierung der Kontaktflächen der beiden Teile zu verbessern. Alternativ oder in Kombination könnte man die Schmierung der Kontaktflächen ggf. auch über eine Balligkeit in einer der beiden Kontaktflächen, oder auch in beiden Flächen, erreichen.

Die Aufgabe wird zudem gelöst durch ein Getriebe für eine Windkraftanlage, bestehend aus mindestens einer Planetenstufe und einem mit der zumindest einen Planentenstufe antriebsverbundenen Nabenelement, wobei zumindest eine Antriebsverbindung zwischen mehreren Planetenstufen und/oder zwischen der zumindest einen Planetenstufe und dem Nabenelement als Welle-Nabe-Verbindung wie zuvor beschrieben ausgeführt ist. Insbesondere kann hierbei vorgesehen sein, dass die nachfolgende Planetenstufe gegenüber der vorangestellten Planetenstufe schneller drehend ist.

Die Aufgabe wird auch gelöst durch einen Antriebsstrang für eine Windkraftanlage, umfassend eine Rotorwelle, die drehmomentübertragend mit einem Getriebe verbunden ist und einen mit dem Getriebe drehmomentübertragend verbundenen Generator, wobei das Getriebe wie zuvor beschrieben ausgebildet ist. Darüber hinaus können das Planetengetriebe und der Generator auch ineinander integriert ausgebildet sein, also als ein Generatorgetriebe ausgebildet sein.

Gleichermaßen wird die zugrundeliegende Aufgabe gelöst durch eine Windkraftanlage, umfassend eine Gondel, an der drehbar ein Mehrblattrotor angeordnet ist, der mit einem Antriebsstrang drehmomentübertragend verbunden ist, wobei der Antriebsstrang wie zuvor beschrieben ausgebildet ist.

Die Lösung der zugrundeliegende Aufgabenstellung erfolgt zudem durch ein Datenagglomeration mit in einer gemeinsamen Datei zusammengefassten oder über verschiedene Dateien verteilten Datenpaketen zur Abbildung der dreidimensionalen Formgestaltung und/oder der Wechselwirkungen sämtlicher in einer wie vorstehend beschriebenen Welle-Nabe-Verbindung vorgesehenen Bestandteile, wobei die Datenpakete dazu hergerichtet sind bei einer Verarbeitung durch eine Datenverarbeitungseinrichtung eine additive Herstellung der Bestandteile der Welle-Nabe-Verbindung, insbesondere durch 3D-Druck mittels eines 3D-Druckers, und/oder eine Simulation der Funktionsweise der Welle-Nabe-Verbindung durchzuführen. Dies ermöglicht eine kostengünstige Herstellung von Prototypen und/oder computerbasierten Simulationen, um die Funktionsweise der Welle-Nabe-Verbindung zu studieren, Probleme im konkreten Anwendungsfall zu identifizieren und Verbesserungen zu finden.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: einen strukturellen Aufbau einer Welle-Nabe-Verbindung;
Fig. 2 bis 4: eine erste, zweite und dritte Ausgestaltung mit einer zwischen Gehäuseelement und Nabenelement einsitzenden Buchse;
Fig. 5: eine weitere Ausgestaltung ohne Buchse zwischen Gehäuseelement und Nabenelement;
Fig. 6a), 6b): Ansichten des Nabenelements und der Welle;
Fig. 7: ein Planetengetriebe in einem Antriebsstrang für eine Windkraftanlage und
Fig. 8: eine perspektivische Darstellung einer Windkraftanlage.

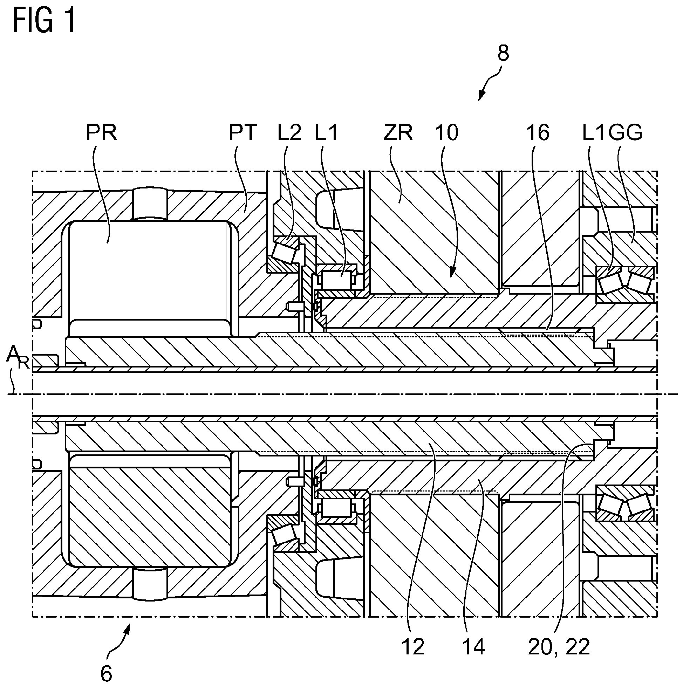

In der Figur 1 ist ein struktureller Aufbau einer möglichen Konfiguration einer Welle-Nabe-Verbindung 10 gezeigt, die bezüglich ihrer Details im Verlauf anhand der weiteren Figuren beschrieben wird. Die Welle-Nabe-Verbindung 10 ist vorliegend als Antriebsverbindung zwischen einer Planetenstufe 6 und einer Stirnradstufe 8 vorgesehen. Von der Planetenstufe 6 ist lediglich ein Planetenradträger PT und der Verzahnungseingriff von Planetenrädern PR mit einer Welle 12 gezeigt, wobei die Welle 12 als Sonnenwelle ausgeführt ist. Von der Stirnradstufe 8 ist lediglich ein Nabenelement 14 und ein mit diesem drehfest verbundenes Zahnrad ZR gezeigt. Die Lagerung des Nabenelements 14 erfolgt über eine Lageranordnung L1 gegenüber einem Getriebegehäuse GG. Über die Lageranordnung L1 können in das äußere Nabenelement 14 eingeleitete Axialkräfte abgestützt werden. Die Lagerung der Welle 12 erfolgt zum einen über eine Steckverzahnung 16, über die die Welle 12 mit den außenumfänglich angeordneten Nabenelement 14 antriebsverbunden ist. Zum anderen erfolgt die Lagerung der Welle 12 mittelbar über eine Lageranordnung L2 des Planetenradträgers PT in dem Getriebegehäuse GG. Eine Drehung der Welle 12 und des Nabenelements 14 kann um eine Hauptrotationsachse A_{R} erfolgen. Bei einer Anwendung, in der die Welle-Nabe-Verbindung 10 beispielsweise in einem Planetengetriebe für eine Windkraftanlage zum Einsatz kommt, kann innerhalb der Welle 12 ein nicht mitdrehendes Pitchrohr verlaufen. Das Nabenelement 14 ist vorliegend auch als Hohlwelle ausgeführt. Die Welle 12 und das Nabenelement 14 liegen über eine Paarung von Axialkontaktflächen 20, 22 aneinander an. Über die Axialkontaktflächen 20, 22 kann eine Axialkraft abgestützt werden, die während eines Betriebs in das Nabenelement 14 eingeleitet wird.

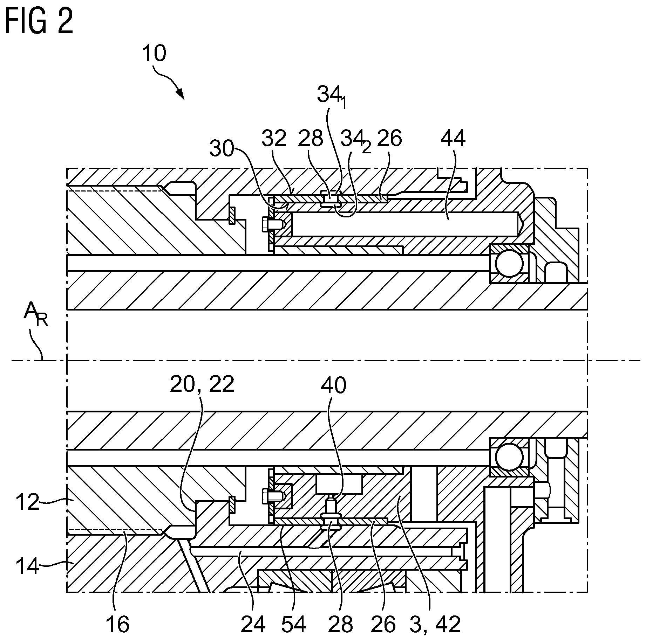

Die Figur 2 zeigt eine Detailierung des endseitigen Bereichs der Einheit aus Planetengetriebe 2 und Stirnradstufe 8. Es handelt sich um den Bereich, der einer Generatoreinheit zugewandt ist, die allerdings nicht dargestellt ist. Das Getriebegehäuse 3 weist hier ein Gehäuseelement auf, das als Gehäusedeckel 42 ausgeführt ist. Der Gehäusedeckel 42 kann beispielsweise gegenüber dem restlichen Getriebegehäuse 3 verschraubt sein. In der Struktur des Gehäusedeckels 42 ist eine Ölverteilung 44 vorgesehen, die beispielsweise mit einer externen Ölpumpe verbunden ist, die unter einem Druck stehendes Schmieröl bereitstellt.

Es ist ein Ölkanal 24 vorgesehen, der ausgehend von der Ölverteilung 44 verläuft und im Bereich der Steckverzahnung 16 mündet. Vorliegend ist dargestellt, dass der Ölkanal 24 in einem axialen Bereich zwischen der Steckverzahnung 16 und der Paarung von Axialkontaktflächen 20, 22 münden kann. Über den Ölkanal 24 ist es möglich zunächst der Steckverzahnung 16 Schmieröl zur Beölung zuzuführen. Der Ölkanal 24 verläuft von dem drehfest angeordnet Gehäusedeckel 42 zu dem sich im Betrieb drehenden Nabenelement 14. Zur Übergabe des Schmieröls ist zwischen dem Gehäusedeckel 42 und dem Nabenelement 14 eine berührungslose Buchse 26 angeordnet. Die Buchse 26 weist zumindest eine radiale Durchgangsbohrung 28 auf. Vorliegend ist zu erkennen, dass die Buchse 26 umlaufend mehrere radiale Durchgangsbohrungen 28 ausbildet. Über die zumindest eine Durchgangsbohrung 28 ist sichergestellt, dass das Schmieröl über die Buchse 26 von dem Gehäusedeckel 42 in das Nabenelement 14 strömen kann und die Buchse 26 gleichzeitig als Abdichtung zwischen Gehäusedeckel 42 und Nabenelement 14, zwischen denen im Betrieb eine Relativdrehung herrscht, dient. Die Buchse 26 ist in dem Gehäusedeckel 42 drehfest gehalten. Zwischen der Buchse 26 und dem Nabenelement 14 ist ein Schmierspalt 54 eingestellt. In dem Gehäusedeckel 42 ist in dem Ölkanal 24 eine Blendbohrung 40 vorgesehen, welche auch als Verjüngung des Querschnitts bezeichnet werden kann und durch die der Öldurchfluss eingestellt werden kann.

In der Figur 2 ist eine Ausgestaltung gezeigt, bei der die Buchse 26 auf einer Innenumfangsfläche 30 und auf einer Außenumfangsfläche 32 jeweils eine umfänglich verlaufende Ölnut 34₁, 34₂ ausbildet. Die beiden Ölnuten 34₁, 34₂ liegen hierbei bevorzugt in einer Axialebene. Ferner ist zu erkennen, dass der Ölkanal 24 in dem Nabenelement 14 über einen radialen Verlauf im Bereich der Steckverzahnung 16 mündet.

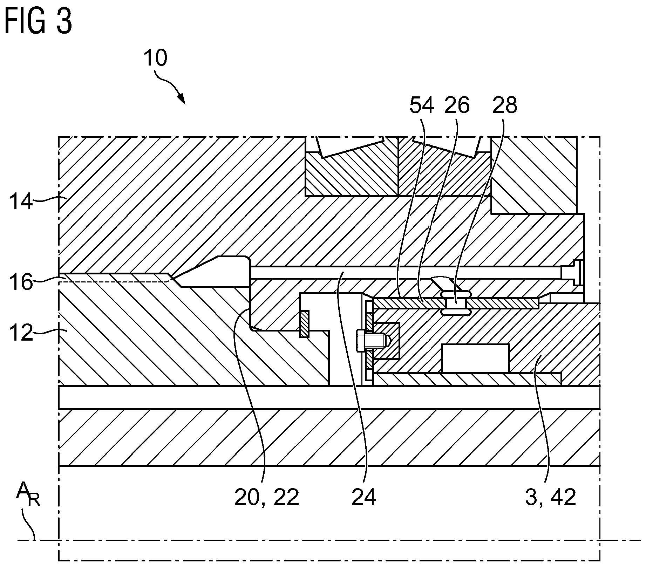

In der Figur 3 ist eine Ausgestaltung gezeigt, bei der Ölkanal 24 in dem Nabenelement 14 über einen axialen Verlauf im Bereich der Steckverzahnung 16 mündet. Im Übrigen entsprechen sich die Ausgestaltungen der Figuren 2 und 3.

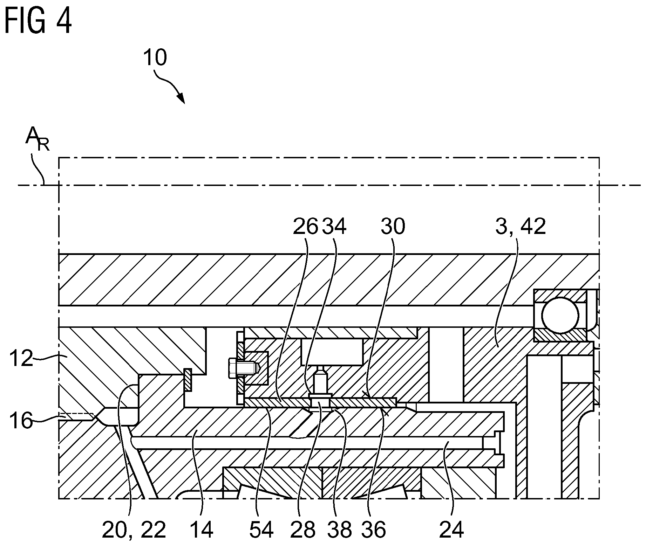

In der Figur 4 ist eine Ausgestaltung gezeigt, bei der die Buchse 26 auf einer Innenumfangsfläche 30 eine umfänglich verlaufende Ölnut 34 ausbildet und eine Innenumfangsfläche 36 des Nabenelements 14 eine umfänglich verlaufende Ölnut 38 ausbildet. Zudem kann auch hier die Ölnut 38 in einer Axialebene mit der zumindest einen radialen Durchgangsbohrungen 28 der Buchse 26 liegen. Im Übrigen entsprechen sich die Ausgestaltungen der Figuren 2, 3 und 4.

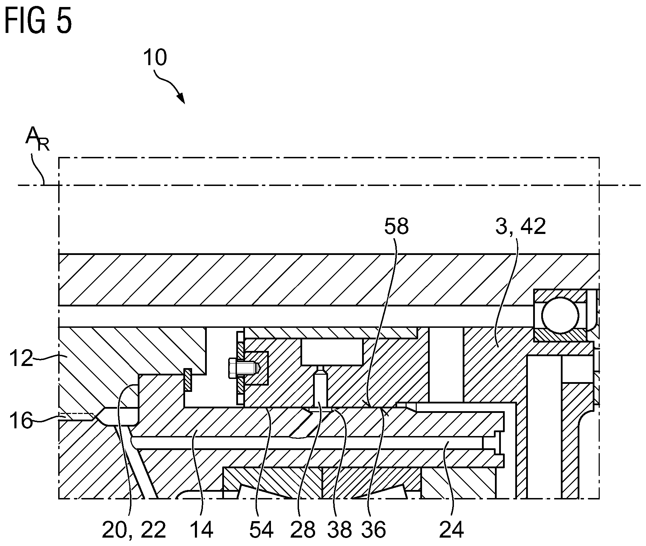

In der Figur 5 ist eine Ausgestaltung ohne Buchse 26 gezeigt. Stattdessen ist unmittelbar zwischen einer Innenumfangsfläche 58 des Gehäuseelements 3 und einer Außenumfangsfläche 36 des Nabenelements 14 der Schmierspalt 54 zur Übergabe von Schmieröl gebildet. Hierbei kann eine Beschichtung aus einem gleitfähigen Material vorgesehen sein, die entweder auf der Innenumfangsfläche 58 des Gehäuseelements 3 oder der Außenumfangsfläche 36 des Nabenelements 14 aufgebracht ist.

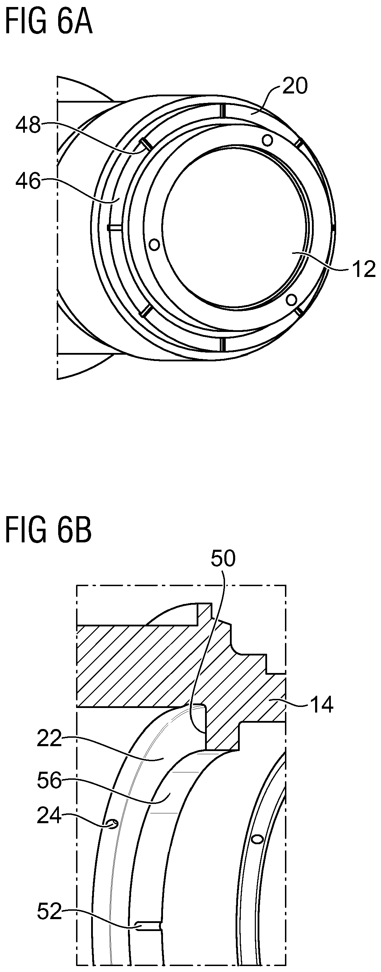

Die Figur 6 zeigt eine Axialansicht der Welle 12 - Fig. 6a) - und eine perspektivische Schnittansicht des Nabenelements 14 - Fig. 6b). In der Figur 6a) ist eine Anlageschulter 46 zu erkennen, auf der die Axialanlagefläche 20 angeordnet ist. Auf der Axialanlagefläche 20 sind eine Mehrzahl radial verlaufende Ölnuten 48 angeordnet. Die Mehrzahl an Ölnuten 48 sind über den Umfang der Axialanlagefläche 20 gleichmäßig verteilt angeordnet. Vorliegend sind acht Ölnuten 48 vorgesehen, wobei die Anzahl hiervon auch abweichen kann. In der Figur 6b) ist eine Anlageschulter 50 des Nabenelements 14 gezeigt, wobei seitlich auf der Anlageschulter 50 die Axialanlagefläche 22 angeordnet ist. Auf einer Zylinderfläche 56 der Anlageschulter 50 sind eine Mehrzahl axial verlaufende Ölnuten 52 angeordnet. Die Mehrzahl an Ölnuten 52 sind über den Umfang der Zylinderfläche 56 gleichmäßig verteilt angeordnet.

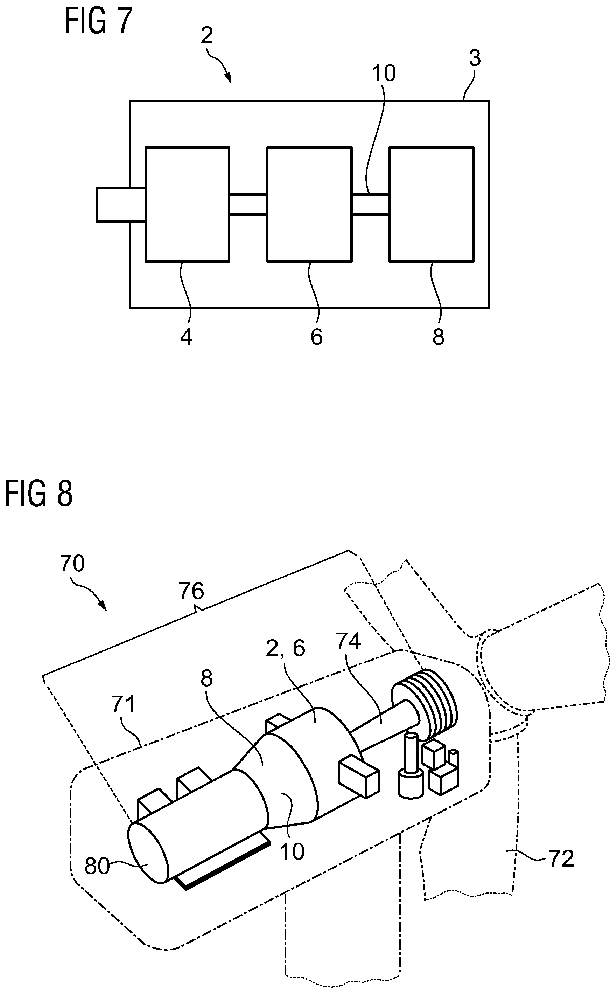

Die Figur 7 zeigt rein exemplarisch ein Planetengetriebe 2, beispielsweise für eine Windkraftanlage. In einem Getriebegehäuse 3 sind einander nachgeschaltet eine erste und zweite umlaufende Planetenstufe 4, 6 und eine Stirnradstufe 8 aufgenommen. Vorliegend ist zwischen der zweiten Planetenstufe 6 und der Stirnradstufe 8 eine Welle-Nabe-Verbindung 10 als Antriebsverbindung vorgesehen. Es kann vorgesehen sein, dass die zweite Planetenstufe 6 gegenüber der ersten Planetenstufe 4 schneller drehend ausgelegt ist.

In der Figur 8 ist eine Ausführungsform einer Windkraftanlage 70 dargestellt. Die Windkraftanlage 70 umfasst eine Gondel 71, an der drehbar ein Mehrblattrotor 72 angebracht ist. Der Mehrblattrotor 72 ist mit einer Hauptwelle 74 drehmomentübertragend verbunden, wobei die Hauptwelle 74 zu einem Antriebsstrang 76 gehört. Der Antriebsstrang 76 umfasst ferner ein Planetengetriebe 2, das drehmomentübertragend mit der Hauptwelle 74 verbunden ist. Das Planetengetriebe 2 weist zumindest eine Planetenstufe 6 und eine Stirnradstufe 8 auf und ist mit einem Generator 80 gekoppelt. Vorliegend ist zwischen der Planetenstufe 6 und der Stirnradstufe 8 eine Welle-Nabe-Verbindung 10 als Antriebsverbindung vorgesehen, wobei die Welle-Nabe-Verbindung 10 wie zuvor beschrieben ausgeführt sein kann.

### Bezugszeichenliste

- PR: Planetenrad
- PT: Planetenträger
- L1, 2: Lageranordnungen
- ZR: Zahnrad
- GG: Getriebegehäuse
- 2: Planetengetriebe
- 3: Getriebeelement
- 4: Planetenstufe
- 6: Planetenstufe
- 8: Stirnradstufe
- 10: Welle-Nabe-Verbindung
- 12: Welle
- 14: Nabenelement
- 16: Steckverzahnung
- 18: Stirnfläche
- 20: Axialkontaktfläche
- 22: Axialkontaktfläche
- 24: Ölkanal
- 26: Buchse
- 28: Durchgangsbohrung
- 30: Innenumfangsfläche
- 32: Außenumfangsfläche
- 34: Ölnut
- 36: Innenumfangsfläche
- 38: Ölnut
- 40: Blendbohrung
- 42: Gehäusedeckel
- 44: Ölverteilung
- 46: Anlageschulter
- 48: Ölnut
- 50: Anlageschulter
- 52: Ölnut
- 54: Schmierspalt
- 56: Zylinderfläche
- 58: Innenumfangsfläche
- 70: Windkraftanlage
- 71: Gondel
- 72: Mehrblattrotor
- 74: Hauptwelle
- 76: Antriebsstrang
- 80: Generator

## Patentansprüche

1. Welle-Nabe-Verbindung (10) für ein Planetengetriebe (2), umfassend
eine Welle (12),
ein mit der Welle (12) über eine Steckverzahnung (16) um eine Hauptrotationsachse (A_{R}) antriebsverbundenes und die Welle (12) außenumfänglich umgebendes Nabenelement (14),
wobei ein bezüglich der Hauptrotationsachse A_{R} feststehendes Gehäuseelement (3) vorgesehen ist und in dem Gehäuseelement (3) und dem Nabenelement (14) ein im Bereich der Steckverzahnung (16) mündender Ölkanal (24) verläuft, um über den Ölkanal (24) zumindest der Steckverzahnung (16) Schmieröl zur Beölung zuzuführen,
**dadurch gekennzeichnet, dass**
der Ölkanal zwischen dem Gehäuseelement (3) und dem Nabenelement (14) einen Schmierspalt (54) zur Übergabe von Schmieröl ausbildet und im Bereich des Schmierspaltes von radial innen nach radial außen verläuft.

2. Welle-Nabe-Verbindung (10) nach Anspruch 1, **dadurch gekennzeichnet, dass** ein Getriebegehäuse (GG) vorgesehen ist, in dem die Welle-Nabe-Verbindung (10) aufgenommen ist und das Gehäuseelement (3) als endseitig angeordneter Gehäusedeckel (42) des Getriebegehäuse (GG) ausgebildet ist.

3. Welle-Nabe-Verbindung (10) nach Anspruch 1 oder 2, **dadurch gekennzeichnet, dass** das Gehäuseelement (3) radial innerhalb in dem Nabenelement (14) einsitzt.

4. Welle-Nabe-Verbindung (10) nach einem der Ansprüche 1 bis 3, **dadurch gekennzeichnet, dass** auf einer Innenumfangsfläche (58) des Gehäuseelements (3) oder einer Außenumfangsfläche (36) des Nabenelements (14) eine Beschichtung aus einem gleitfähigen Material aufgebracht ist.

5. Welle-Nabe-Verbindung (10) nach einem der Ansprüche 1 bis 4, **dadurch gekennzeichnet, dass** zwischen dem Gehäuseelement (3) und dem Nabenelement (14) zumindest eine Buchse (26) angeordnet ist und der Schmierspalt (54) zwischen der Buchse (26) und dem Nabenelement (14) gebildet ist.

6. Welle-Nabe-Verbindung (10) nach Anspruch 5, **dadurch gekennzeichnet, dass** die Buchse (26) zumindest eine radiale Bohrung (28), bevorzugt umlaufend mehrere Bohrungen (28), aufweist.

7. Welle-Nabe-Verbindung (10) nach Anspruch 5 oder 6, **dadurch gekennzeichnet, dass** die Buchse (26) an dem Gehäuseelement (3) drehfest gehalten ist.

8. Welle-Nabe-Verbindung (10) nach einem der Ansprüche 5 oder 7, **dadurch gekennzeichnet, dass** die Buchse (26) auf einer Innenumfangsfläche (30) und/oder auf einer Außenumfangsfläche (32) eine umfänglich verlaufende Ölnut (34) ausbildet und die zumindest eine radiale Bohrung (28) in einer Axialebene mit der zumindest einen Ölnut (34) liegt.

9. Welle-Nabe-Verbindung (10) nach Anspruch 8, **dadurch gekennzeichnet, dass** eine Innenumfangsfläche (36) des Nabenelements (14) eine umfänglich verlaufende Ölnut (38) ausbildet und die Ölnut (38) in einer Axialebene mit der zumindest einen radialen Bohrung (28) der Buchse (26) liegt.

10. Welle-Nabe-Verbindung (10) nach einem der Ansprüche 1 bis 9, **dadurch gekennzeichnet, dass** in dem Gehäuseelement (3) oder in dem Nabenelement (14) der Ölkanal (24) durch eine Blendbohrung (40) geführt ist, welche als Verjüngung des Querschnitts bezeichnet wird und durch die der Öldurchfluss eingestellt wird.

11. Welle-Nabe-Verbindung (10) nach einem der Ansprüche 1 bis 10, **dadurch gekennzeichnet, dass** der Ölkanal (24) in dem Nabenelement (14) über einen axialen Verlauf im Bereich der Steckverzahnung (16) oder in dem Nabenelement (14) über einen radialen Verlauf im Bereich der Steckverzahnung (16) mündet.

12. Welle-Nabe-Verbindung (10) nach einem der Ansprüche 1 bis 11, **dadurch gekennzeichnet, dass** die Welle (12) und das Nabenelement (14) über eine Paarung von Axialkontaktflächen (20, 22) aneinander anliegen und der Ölkanal (24) in einem axialen Bereich zwischen der Steckverzahnung (16) und der Paarung von Axialkontaktflächen (20, 22) mündet.

13. Getriebe (2), bestehend aus mindestens einer Planetenstufe (4) und einem mit der zumindest einen Planentenstufe (4) antriebsverbundenen Nabenelement (14),
wobei zumindest eine Antriebsverbindung zwischen mehreren Planetenstufen und/oder zwischen der zumindest einen Planetenstufe (4) und dem Nabenelement (14) als Welle-Nabe-Verbindung (10) nach einem der Ansprüche 1 bis 12 ausgeführt ist.

14. Antriebsstrang (76), umfassend eine Welle (74), die drehmomentübertragend mit einem Getriebe (2) verbunden ist und einen mit dem Getriebe (2) drehmomentübertragend verbundenen Maschine (80), **dadurch gekennzeichnet, dass** das Getriebe (2) nach Anspruch 13 ausgebildet ist.

15. Windkraftanlage (70), umfassend eine Gondel (71), an der drehbar ein Mehrblattrotor (72) angeordnet ist, der mit einem Antriebsstrang (76) drehmomentübertragend verbunden ist, **dadurch gekennzeichnet, dass** der Antriebsstrang (76) nach Anspruch 14 ausgebildet ist.

## Claims

1. Shaft-hub connection (10) for a planetary transmission (2), comprising
a shaft (12),
a hub element (14) drivingly connected to the shaft (12) about a main rotation axis (A_{R}) via splines (16) and surrounding the outer circumference of the shaft (12),
wherein a housing element (3) fixed with respect to the main rotation axis A_{R} is provided, and an oil channel (24) extends in the housing element (3) and the hub element (14), the oil channel (24) opens out in the region of the splines (16), in order to supply at least the splines (16) with lubricating oil for oiling via the oil channel (24),
**characterized in that**
the oil channel between the housing element (3) and the hub element (14) forms a lubrication gap (54) for transferring lubricating oil and extends radially from the inside radially outwards in the region of the lubrication gap.

2. Shaft-hub connection (10) according to Claim 1, **characterized in that** a transmission housing (GG) is provided in which the shaft-hub connection (10) is received, and the housing element (3) is formed as an end-side housing cover (42) of the transmission housing (GG) .

3. Shaft-hub connection (10) according to Claim 1 or 2, **characterized in that** the housing element (3) sits radially inside the hub element (14).

4. Shaft-hub connection (10) according to any one of Claims 1 to 3, **characterized in that** a coating of sliding material is applied to an inner circumferential surface (58) of the housing element (3) or to an outer circumferential surface (36) of the hub element (14).

5. Shaft-hub connection (10) according to any one of Claims 1 to 4, **characterized in that** at least one bushing (26) is arranged between the housing element (3) and the hub element (14), and the lubrication gap (54) is formed between the bushing (26) and the hub element (14).

6. Shaft-hub connection (10) according to Claim 5, **characterized in that** the bushing (26) has at least one radial bore (28), preferably a plurality of bores (28) about the circumference.

7. Shaft-hub connection (10) according to Claim 5 or 6, **characterized in that** the bushing (26) is held for conjoint rotation on the housing element (3).

8. Shaft-hub connection (10) according to either of Claims 5 and 7, **characterized in that** the bushing (26), on an inner circumferential surface (30) and/or on an outer circumferential surface (32), forms a circumferentially extending oil groove (34), and the at least one radial bore (28) lies in an axial plane with the at least one oil groove (34).

9. Shaft-hub connection (10) according to Claim 8, **characterized in that** an inner circumferential surface (36) of the hub element (14) forms a circumferentially extending oil groove (38), and the oil groove (38) lies in an axial plane with the at least one radial bore (28) of the bushing (26).

10. Shaft-hub connection (10) according to any one of Claims 1 to 9, **characterized in that**, in the housing element (3) or in the hub element (14), the oil channel (24) is routed through an aperture bore (40), which is designated as a tapering of the cross section and by way of which the oil flow is adjusted.

11. Shaft-hub connection (10) according to any one of Claims 1 to 10, **characterized in that** the oil channel (24) opens out in the hub element (14) via an axial course in the region of the splines (16) or in the hub element (14) via a radial course in the region of the splines (16).

12. Shaft-hub connection (10) according to any one of Claims 1 to 11, **characterized in that** the shaft (12) and the hub element (14) bear against each other via a pair of axial contact surfaces (20, 22), and the oil channel (24) opens out in an axial region between the splines (16) and the pair of axial contact surfaces (20, 22).

13. Transmission (2), consisting of at least one planetary stage (4) and of a hub element (14) drivingly connected to the at least one planetary stage (4), wherein at least one drive connection between a plurality of planetary stages and/or between the at least one planetary stage (4) and the hub element (14) is designed as a shaft-hub connection (10) according to any one of Claims 1 to 12.

14. Drive train (76) comprising a shaft (74), which is torque-transmittingly connected to a transmission (2), and a machine (80), which is torque-transmittingly connected to the transmission (2), **characterized in that** the transmission (2) is designed according to Claim 13.

15. Wind turbine (70), comprising a nacelle (71) on which is rotatably arranged a multi-blade rotor (72) that is torque-transmittingly connected to a drive train (76), **characterized in that** the drive train (76) is designed according to Claim 14.

## Revendications

1. Liaison arbre-moyeu (10) pour un engrenage planétaire (2), comprenant
un arbre (12),
un élément de moyeu (14) entraîné en rotation avec l'arbre (12) par l'intermédiaire d'une denture à emboîtement (16) autour d'un axe principal de rotation (A_{R}), et entourant l'arbre (12) sur sa périphérie extérieure,
un élément de boîtier (3) fixe par rapport à l'axe principal de rotation A_{R} étant prévu, et un canal d'huile (24) débouchant dans la zone de la denture à emboîtement (16) s'étendant dans l'élément de boîtier (3) et l'élément de moyeu (14), afin d'acheminer, via le canal d'huile (24), de l'huile de lubrification au moins vers la denture à emboîtement (16) pour son huilage, **caractérisée en ce que**
le canal d'huile forme un interstice de lubrification (54) entre l'élément de boîtier (3) et l'élément de moyeu (14) pour le transfert de l'huile de lubrification et s'étend, dans la zone de l'interstice de lubrification, de manière radialement intérieure vers radialement extérieure.

2. Liaison arbre-moyeu (10) selon la revendication 1, **caractérisée en ce qu'**un boîtier d'engrenage (GG) est prévu, dans lequel la liaison arbre-moyeu (10) est logée, et **en ce que** l'élément de boîtier (3) est conçu sous la forme d'un couvercle de boîtier (42) disposé en extrémité du boîtier d'engrenage (GG).

3. Liaison arbre-moyeu (10) selon la revendication 1 ou 2, **caractérisée en ce que** l'élément de boîtier (3) est inséré radialement à l'intérieur dans l'élément de moyeu (14).

4. Liaison arbre-moyeu (10) selon l'une quelconque des revendications 1 à 3, **caractérisée en ce qu'**un revêtement constitué d'un matériau favorisant le glissement est appliqué sur une surface périphérique intérieure (58) de l'élément de boîtier (3) ou sur une surface périphérique extérieure (36) de l'élément de moyeu (14).

5. Liaison arbre-moyeu (10) selon l'une quelconque des revendications 1 à 4, **caractérisée en ce qu'**au moins une bague (26) est disposée entre l'élément de boîtier (3) et l'élément de moyeu (14), et **en ce que** l'interstice de lubrification (54) est formé entre la bague (26) et l'élément de moyeu (14).

6. Liaison arbre-moyeu (10) selon la revendication 5, **caractérisée en ce que** la bague (26) présente au moins un perçage radial (28), de préférence plusieurs perçages (28) sur la périphérie.

7. Liaison arbre-moyeu (10) selon la revendication 5 ou 6, **caractérisée en ce que** la bague (26) est maintenue de manière solidaire en rotation sur l'élément de boîtier (3).

8. Liaison arbre-moyeu (10) selon l'une quelconque des revendications 5 ou 7, **caractérisée en ce que** la bague (26) forme, sur une surface périphérique intérieure (30) et/ou sur une surface périphérique extérieure (32), une rainure d'huile (34) s'étendant sur la périphérie, et **en ce que** l'au moins un perçage radial (28) est situé dans un plan axial avec l'au moins une rainure d'huile (34).

9. Liaison arbre-moyeu (10) selon la revendication 8, **caractérisée en ce qu'**une surface périphérique intérieure (36) de l'élément de moyeu (14) forme une rainure d'huile (38) s'étendant sur la périphérie, et **en ce que** la rainure d'huile (38) est située dans un plan axial avec l'au moins un perçage radial (28) de la bague (26).

10. Liaison arbre-moyeu (10) selon l'une quelconque des revendications 1 à 9, **caractérisée en ce que**, dans l'élément de boîtier (3) ou dans l'élément de moyeu (14), le canal d'huile (24) est guidé à travers un perçage calibré (40), lequel est désigné comme un rétrécissement de section et au moyen duquel le débit d'huile est réglé.

11. Liaison arbre-moyeu (10) selon l'une quelconque des revendications 1 à 10, **caractérisée en ce que** le canal d'huile (24) débouche dans l'élément de moyeu (14), avec une orientation axiale dans la zone de la denture à emboîtement (16), ou dans l'élément de moyeu (14), avec une orientation radiale dans la zone de la denture à emboîtement (16).

12. Liaison arbre-moyeu (10) selon l'une quelconque des revendications 1 à 11, **caractérisée en ce que** l'arbre (12) et l'élément de moyeu (14) sont en appui l'un contre l'autre par l'intermédiaire d'un appariement de surfaces de contact axiales (20, 22), et le canal d'huile (24) débouche dans une zone axiale située entre la denture à emboîtement (16) et l'appariement de surfaces de contact axiales (20, 22).

13. Engrenage (2), constitué d'au moins un étage planétaire (4) et d'un élément de moyeu (14) relié en entraînement à l'au moins un étage planétaire (4),
dans lequel au moins une liaison d'entraînement entre plusieurs étages planétaires et/ou entre l'au moins un étage planétaire (4) et l'élément de moyeu (14) est réalisée sous la forme d'une liaison arbre-moyeu (10) selon l'une quelconque des revendications 1 à 12.

14. Chaîne cinématique (76), comprenant un arbre (74) relié en transmission de couple à un engrenage (2), et une machine (80) reliée en transmission de couple à l'engrenage (2), **caractérisée en ce que** l'engrenage (2) est réalisé selon la revendication 13.

15. Éolienne (70), comprenant une nacelle (71) sur laquelle est disposé de manière rotative un rotor à plusieurs pales (72), lequel est relié en transmission de couple à une chaîne cinématique (76), **caractérisée en ce que** la chaîne cinématique (76) est réalisée selon la revendication 14.
